# EUROPÄISCHE PATENTSCHRIFT

(11) **EP 1 814 753 B1**
(45) Veröffentlichungstag und Bekanntmachung des Hinweises auf die Patenterteilung: **08.01.2014**
(21) Anmeldenummer: 05813246.5
(22) Anmeldetag: 07.11.2005
(51) Int. Cl.: B60J 1/20, B60J 7/00, B60R 5/04

(54) **ROLLOANORDNUNG FÜR EIN FAHRZEUG**
ROLLER BLIND SYSTEM FOR A MOTOR VEHICLE
SYSTEME DE STORE POUR VEHICULE

(30) Priorität: 19.11.2004 DE 102004055999; 30.05.2005 DE 102005024657
(43) Veröffentlichungstag der Anmeldung: 08.08.2007
(73) Patentinhaber: Webasto SE, 82131 Stockdorf (DE)
(72) Erfinder: GLASL, Sebastian, 81827 München (DE); ADLHOCH, Christian, 81241 München (DE); SCHULZ, Horst-Martin, 86947 Weil (DE); HIRSCHVOGEL, Engelbert, 86928 Hofstetten (DE); BERGMILLER, Alexander, 86343 Königsbrunn (DE); OERKE, Philip, 81479 München (DE)
(74) Vertreter: Epping - Hermann - Fischer
(86) Internationale Anmeldenummer: PCT/DE2005/001999
(87) Internationale Veröffentlichungsnummer: WO 2006/053520

(56) Entgegenhaltungen:
- EP-A- 1 256 472
- EP-A1- 1 553 259
- DE-A1- 10 220 947
- DE-A1- 19 739 919
- DE-A1- 19 834 777
- DE-B- 1 269 782
- GB-A- 1 416 431

## Beschreibung

Die vorliegende Erfindung betrifft Rolloanordnungen für ein Fahrzeug gemäß dem Oberbegrif vom Anspruch 1. Rolloanordnungen zur Verwendung im Fahrzeugbau dienen beispielsweise als Sonnenschutz unter einer transparenten Fahrzeugkarosseriefläche oder auch als Abdeckung für einen Kofferraum bei einem Kombifahrzeug. Solche Anordnungen bestehen in der Regel aus einer Rollobahn, die an ihrem einen Ende auf ein Wickelrohr aufgewickelt wird und die durch eine Rückstellkraft des Wickelrohrs gespannt ist. Das andere Ende der Rollobahn ist üblicherweise an einem Zugspriegel befestigt, welcher von einem elektrischen Antrieb oder per Hand bewegt werden kann, wodurch die Rollobahn entsprechend ausgezogen oder wieder aufgewickelt wird.

Wenn an einer solchen Rolloanordnung die Rollobahn jedoch nur zwischen dem Zugspriegel und der Wickelrolle gespannt ist, kann selbst bei relativ hoher Spannung in dieser Richtung beispielsweise bei einer teilweise geöffneten Dachöffnung über der Rollobahn diese ins Flattern geraten. Ferner kann auch der Spalt, der bei solchen Ausführungsformen am Rand der Rollobahn in der Regel vorhanden ist, optisch störend wirken.

Um diese Nachteile zu überwinden, sind Rollosysteme bekannt, bei denen die Rollobahn nicht nur entlang ihrer Auszugsrichtung, sondern auch quer hierzu gespannt ist. So beschreibt beispielsweise die DE 197 39 919 A1 eine Rolloanordnung, bei der die Seitenkanten einer Rollobahn so ausgebildet sind, dass sie in seitlich angebrachte, karosseriefeste Führungsschienen so eingreifen, dass sie bei Öffnungs- und Schließbewegung des Rollos zwar leicht verschiebbar sind, jedoch nicht quer zur Rollobewegungsrichtung aus den Führungsschienen herausgezogen werden können. Damit sind die Randbereiche der Rollobahn gegen Flatter- und Schwingungsbewegungen gesichert und bei entsprechendem Abstand der beidseitigen Führungsschienen im Vergleich zur Breite der Rollobahn kann die Rollobahn quer zur Auszugsrichtung in Spannung gebracht werden. Die Seitenkanten der Rollobahn sind hierzu mit Randversteifungen versehen, die zum Eingriff in abgewinkelte Führungsbereiche gegenüber der Ebene der Rollobahn abknickbar, jedoch zum Aufwickeln der Rollobahn auf das Wickelrohr in ihre gestreckte, unabgeknickte Flachlage rückführbar sind.

Die oben beschriebene Rolloanordnung hat einerseits den Nachteil, dass durch das ständige Umbiegen der Randversteifung entlang der Abbiegelinie ein kritischer Bereich generiert wird, entlang dessen durch Materialermüdung die Rollobahn oder die Randversteifung beschädigt werden kann, und es kann sogar zu Abriss kommen. Andererseits wird zur Führung dieser Randversteifung eine Kulisse benötigt, die die Randversteifung beim Führen umlegt und somit nicht extrudiert (stranggepresst) werden kann, was die Bau- und Montagekosten für eine solche Führung erhöht.

Ein Aspekt der Erfindung befasst sich insbesondere mit der Feder zur Spannung der Rollobahn in Ausziehrichtung des Rollos. Um die Rollobahn in dieser Längsrichtung in jeder Position unter Spannung zu halten, ist bei herkömmlichen Anordnungen das Winkelrohr über eine Rückstellfeder, wie zum Beispiel eine Torsionsfeder, mit einer zentralen Wickelwelle die karosseriefest innerhalb des Winkelrohr gelagert ist, verbunden. Ein solches System ist beispielsweise in der DE 198 34 777 C2 offenbart. Bei ausgezogener Rollobahn wird durch eine derartige Rückstellfeder über das Winkelrohr eine Zugkraft auf die Rollobahn ausgeübt. Nachteilig an einer solchen Anordnung ist jedoch die je nach Auszugslänge der Rollobahn stark variierende Rückstellkraft einer Torsionsfeder.

Aus der DE 1 269 782 A ist eine Vorrichtung zur Führung seitlicher Ränder eines Vorhangs im Inneren von Gleitschienen mit schmalem Schlitz bekannt. Jeder in eine Gleitschiene eingreifende Randstreifen des Vorhangs weist eine biegbare, ununterbrochene Wand auf, die vom Vorhang absteht, um von den Randleisten der Gleitschiene festgehalten zu werden. Des Weiteren weist der Randstreifen des Vorhangs steife, örtliche Verdickungen auf, die die biegbare Wand in Abstand vom Vorhang in der Gleitschiene halten und sein Anlegen auf den Vorhang im aufgerollten Zustand nahezu vollständig erlauben und die das Gleiten des Vorhangs in den Gleitschienen durch Verminderung der Reibung und des Verschleißes begünstigen.

Die EP 1 553 259 A1 offenbart ein Rolloanordnung, mit einem Rollo und einem drehbaren Wickelrohr. Das Rollo hat zwei einander gegenüberliegende Seitenkanten, die gleitend in Führungen angeordnet sind. Die Führungen erstrecken sich entlang der Seitenkanten des Rollos. Die Seitenkanten sind so ausgebildet, dass sie ein einfaches Einführen der Seitenkanten in die Führungen ermöglichen, aber ein Herausziehen der Seitenkanten aus den Führungen verhindern.

Es ist Aufgabe der vorliegenden Erfindung, eine Rolloanordnung für ein Fahrzeug zu schaffen, bei welcher die oben genannten Nachteile vermieden werden.

Diese Aufgabe wird durch Rolloanordnungen gemäß dem Anspruch 1 gelöst.

Bei der erfindungsgemäßen Lösung der Aufgabe gemäß dem Anspruch 1 weist eine Rollobahn entlang beider seitlichen Randbereiche jeweils mindestens ein flexibles, flaches Führungsband auf, welches sich entlang der Ausziehrichtung des Rollos erstreckt und in einer Führung geführt ist. Die Führung beinhaltet dabei eine Kulisse, in der das Führungsband geführt ist, und die ferner einen Austrittsspalt aufweist, durch den die Rollobahn aus der Führung austritt, wobei das Führungsband so geführt ist, dass dessen Grundfläche im Wesentlichen parallel zum benachbarten Bereich der Rollobahn geführt ist und Formgebung und Dimensionierung von Austrittsspalt und Führungsband so bemessen sind, dass das Führungsband nicht von selbst aus der Führung austreten kann. Das Führungsband ist in einem Führungskanal innerhalb der Führung geführt, wobei ein Boden des Führungskanals in einer Ebene parallel zur ausgezogenen Rollobahn verläuft. Die Öffnung des Austrittsspalts ist kleiner als die Breite der Grundfläche des Führungsbands und der Querschnitt des Führungsbands ist an mindestens zwei Punkten am Führungskanal gegen ein Verdrehen um seine Längsachse abgestützt. Die Rollobahn ist im Bereich eines Seitenrands des Führungsbands fixiert.

Vorteilhaft an dieser Erfindung ist, dass hier das Führungsband der Rollobahn beim Abwickeln der Rollobahn nicht umgeknickt und beim Aufwickeln der Rollobahn auf das Wickelrohr wieder flachgelegt werden muss, wodurch entsprechende Materialermüdungen vermieden werden. Weiterhin wird keine Kulisse benötigt, die für das Umknicken steuert, wodurch einfache und damit kostengünstig herstellbare Führungsschienen verwendet werden können. Mit einer solchen Anordnung ist es insbesondere auch möglich, sehr lange und eventuelle schmale Rollobahnen nur quer zur Ausziehrichtung zu spannen und damit Wickelfalten zuverlässig zu vermeiden.

Weitere bevorzugte Ausführungsformen der Erfindung ergeben sich aus den Unteransprüchen.

Das Führungsband kann direkt mit der Führung in Verbindung stehen oder zwischen Führungsband und Führung kann eine Gleitschiene eingebracht und an der Führung befestigt sein. Im letzteren Fall kann durch entsprechende Wahl der Materialien von Gleitschienen des Führungsbands sowohl die Reibung als auch die Geräuschentwicklung beim Verfahren der Rollobahn reduziert werden.

Weitere Vorteilhafte Ausführungsformen der Erfindung weisen zwischen Führungsbahn und Führung oder zwischen Gleitschiene und Führung viele Elemente auf, die Abstandstoleranzen beispielsweise zwischen den Führungen beiderseits der Rollobahn ausgleichen. Solche Federelemente können beispielsweise aus Federstahl oder aus Schaumstoff bestehen.

Zur Befestigung des Führungsbands auf der Rollobahn gibt es zum einen die Möglichkeit, dass das Führungsband lediglich in einen umgeschlagenen Bereich der Rollobahn in deren Randzone eingelegt ist und dort durch Klemmwirkung gehalten wird. Andererseits kann die Kante eines solchen Umschlags auch fest mit der Rollobahn verbunden, vorzugsweise vernäht oder verschweisst sein und so eine Tasche ausbilden, in der das Führungsband verläuft. Bei weiteren, alternativen Ausführungsformen der Erfindung kann das Führungsband in den Umschlag eingeklebt sein (beispielsweise mittels eines beidseitigen Klebebandes oder eines Klebstoffes, insbesondere eines Flüssigklebers) oder das Führungsband kann auch ohne Umschlag der Rollobahn direkt auf diese aufgeklebt werden. Es versteht sich, dass alternative Befestigungsformen denkbar sind. Insbesondere ist hier das Anextrudieren des Führungsbandes an die Rollobahn zu nennen, wobei bei der Extrusion des Führungsbandes gleichzeitig auch dessen Befestigung realisiert wird. Weiterhin kann das Führungsband auch mittels eines Spritzgussverfahrens an die Rollobahn angespritzt oder mittels einer Verschweissung an dieser befestigt werden. Im letzteren Fall wird vorteilhafterweise vor dem Schweissen eine Folie zwischen Führungsband und Rollobahn eingebracht, welche beim Schweissvorgang beispielsweise durch Schmelzen als Haftvermittler wirkt und die Schweissverbindung so verbessert. Vorteilhafterweise wird bei der Extrusion und bei der Verschweissung ein Kunststoff, insbesondere ein faserverstärkter Kunststoff, verwendet.

Bei einer weiteren bevorzugten Ausführungsform der Erfindung besteht die Führung aus einem Unterteil und einem Deckel, der auf diesem Unterteil befestigt ist, jedoch kann bei besonders bevorzugten Ausführungsformen diese Führung auch einteilig ausgebildet sein. Eine einteilige Führung kann ferner eine Biegelinie aufweisen. Bei der letztgenannten Ausführungsform wird die Führung in aufgebogener Form gefertigt, was das Strangpressen eines solchen Profils insbesondere bei kleinen Spaltmassen erleichtert. Anschließend wird die Führung vor oder nach dem Einbringen des Führungsbands so zugebogen, dass nur noch der Austrittsspalt offen bleibt. Wird das Führungsband nachträglich eingebracht, so muss es von vorne oder hinten in die Führung eingefädelt werden. Bei einer weiteren bevorzugten Ausführungsform der Erfindung ist das Führungsband aus einem flexiblen Material gefertigt, um ein Aufwickeln auf das Wickelrohr zu ermöglichen und beispielsweise kann das Führungsband aus einem flexiblen Metall gefertigt sein. Ein solches Metallband kann zusätzlich beispielsweise mit Kunststoff, gegebenenfalls glasfaserverstärkt, umspritzt sein um Geräusche, Reibung und Abrieb zu reduzieren.

Bei weiteren Ausführungsformen der Erfindung mit einem Zugspriegel wird vorzugsweise eine Führungsschiene verwendet, die sowohl eine Zugspriegelführung als auch die Führung des Führungsbands beinhaltet. Somit können wiederum Herstellkosten der Führungen als auch Montagekosten reduziert werden. Bei weiteren bevorzugten Ausführungsformen der Erfindung weist die Rollobahn in den Bereichen, in dem Führungsband und Zugspriegel aufeinander treffen bzw. den geringsten Abstand zueinander haben, ein Verstärkungselement auf, welches dazu dient, die Scherkräfte, die an der Rollobahn wirken, zu reduzieren und so ein Einreissen der Rollobahn zu verhindern. Ein solches Verstärkungselement kann entweder den Zugspriegel und das Führungsband direkt miteinander verbinden oder bei alternativen Ausführungsformen auch so angebracht sein, dass es zwar in der Nähe von Zugspriegel und Führungsbande angebracht ist, ohne jedoch das eine oder das andere oder beide Elemente direkt zu kontaktieren. Vorzugsweise werden dabei Metall oder Kunststoffstreifen eingesetzt, die entlang der Ausziehrichtung des Rollos aufgeklebt, oder im Falle von Kunststoff auch aufgedampft oder angespritzt werden. Eine besonders bevorzugte Ausführung der Erfindung ergibt sich, wenn das Führungsband gleichzeitig als Antriebselement dient, indem es - von einem Antrieb bewegt - die Rollobahn beim Abwickeln vom Wickelrohr schiebt. Vorzugsweise ist dabei das Führungsband drucksteif geführt oder bauartbedingt selbst drucksteif. Ist das Führungsband zusammen mit der Rollobahn auf das Wickelrohr aufgewickelt, so kann es beim Abwickeln die Rollobahn bewegen. Vorzugsweise geschieht dies, indem es einen Zugspriegel der Rollobahn verschiebt.

Bei der Lösung gemäss einem weiteren Aspekt weist eine Rolloanordnung für ein Fahrzeug mit einer Rollobahn sowie mindestens einem Wickelrohr eine Konstantkraftfeder auf, die einerseits mit der Rollobahn und andererseits mit dem Wickelrohr verbunden ist. Eine solche Konstantkraftfeder besteht aus einem spiralförmig gewickelten Federelement aus einem Flachband, vorzugsweise Metallflachband und erfindungsgemäss ist das äussere Ende der Spirale mit der Rollobahn verbunden und das innere Ende der Spirale mit dem Wickelrohr. Vorteilhaft ist hierbei einerseits die relativ einfache Montage einer Konstantkraftfeder in einer erfindungsgemässen Rolloanordnung, wobei sie hier die bisher bekannten Rückstellfedern beispielsweise in Form von Torsionsfedern ersetzt. Andererseits wird hierdurch eine besonders stabile und verschleissfeste Lösung erzielt. Besonders vorteilhaft ist ferner, dass bei einer Konstantkraftfeder definitionsgemäss relativ unabhängig von der Auszugslänge eine konstante Rückstellkraft zur Verfügung steht. Bei den Rückstellfedern herkömmlicher Bauart ist dagegen die Rückstellkraft bei ganz ausgezogener Rollobahn wesentlich grösser als bei kurzen Auszugswegen.

Bei der Lösung gemäss einem weiteren Aspekt wird mindestens ein Wickelrohr von einer Konstantkraftfeder gebildet, mit der die Rollobahn in Verbindung steht und die ein spiralförmig gewickeltes Federelement aus einem Flachband beinhaltet, dessen innen liegendes Ende in jeder Betriebsstellung der Rolloanordnung mindestens eine Wicklung zum Aufwickeln der Rollobahn bildet. Anstatt ein separates Wickelrohr vorzusehen, wird der aufgewickelte Teil der Konstantkraftfeder als Wickelrohr zum Aufwickeln der Rollobahn genutzt, wobei durch den Wegfall eines separaten Wickelrohrs das Gewicht und die Herstellkosten reduziert werden. Weitere bevorzugte Ausführungsformen der Erfindung ergeben sich auch hier wiederum aus den Unteransprüchen.

Bei einer besonders bevorzugten Ausführung dieser Erfindung steht die Konstantkraftfeder mit einem Antrieb wie beispielsweise einem Elektromotor so in Verbindung, dass sie zum Ausfahren der Rollobahn durch den Antrieb abgewickelt wird und entsprechend die Rollobahn verschiebt. Vorteilhaft ist hierbei, dass die Konstantkraftfeder in diesem Fall nicht nur für eine Spannung des Rollos durch ihre Rückstellkraft sorgt, sondern auch die Rollobahn selbst bewegt, wodurch ein separates Antriebskabel oder ein Zahnriemen überflüssig ist. Vorzugsweise wird das Flachband der Konstantkraftfeder im Bereich der ausgezogenen Rollobahnen in einer linearen Führung geführt und bei besonders bevorzugten Ausführungsformen der Erfindung sind sowohl Zugspriegelführungen als auch die Führung des Flachbands in einer gemeinsamen Führungsschiene enthalten, wodurch wiederum Herstellungs- und Montagekosten reduziert werden können.

Bei einer weiteren Ausführungsform dieser Erfindung ist die Rollobahn mit einer Bremsvorrichtung konstanter Bremskraft verbunden, welche die Rollobahn in beliebigen Positionen festlegt. So kann eine stufenlos ausziehbare Rollobahn beispielsweise für die Bewegung per Hand realisiert werden. Vorzugsweise ist die Anordnung hierbei so getroffen, dass die am Führungsband auftretende Reibung zumindest geringfügig größer als die am Wickelrohr bereitgestellte Rückstellkraft zum Aufwickeln der Rollobahn, so dass das Führungsband in Verbindung mit seiner dachseitigen Führung die Funktion der Bremsvorrichtung übernimmt. Bei einer besonders bevorzugten Ausführung der Erfindung dient das Flachband der Konstantkraftfeder gleichzeitig als Führungsband der Rollobahn. In diesem Fall übernimmt die Konstantkraftfeder insgesamt bis zu vier Funktionen, nämlich die Seitenführung und damit die Querspannung der Rollobahn, über ihre Rückstellkraft die Längsspannung der Rollobahn, weiterhin auch das Ausschieben und Zurückziehen des Zugspriegels sowie die Funktion einer Wickelrolle, auf die die Rollobahn aufgewickelt wird.

Im Folgenden wird die Erfindung anhand der beigefügten Zeichnungen 1 bis 5 sowie 6b bis 17 beispielhaft näher erläutert. Dabei zeigt:
Fig. 1 eine schematische Ansicht auf eine erfindungsgemäße Rolloanordnung mit Führungsbändern;
Fig. 2a und b verschiedene alternative Ausführungsformen von Führungen für Führungsbänder;
Fig. 3a bis c verschiedene alternative Ausführungsformen zur Verbindung von Führungsbändern mit einer Rollobahn;
Fig. 4 eine Teilansicht von der Seite auf ein Wickelrohr und ein Führungsband;
Fig. 5 eine Teilansicht auf eine erfindungsgemäße Rollobahn in einem Eckbereich mit einer Verstärkung;
Fig. 6a eine herkömmliche Ausführungsform einer Führung mit verkipptem Führungsband;
Fig. 6b eine weitere alternative Ausführungsform einer Führung;
Fig. 7 eine Führungsschiene mit einer Führung für ein Führungsband sowie einer Kabelführung mit einem Antriebskabel;
Fig. 8 eine Führungsschiene, an der eine Gleitschiene angebracht ist;
Fig. 9 eine weitere alternative Ausführungsform einer Führung mit einer Gleitschiene;
Fig. 10 einen Führungskanal mit kreuzförmigem Querschnitt,
Fig. 11 einen Führungskanal mit kreuzförmigem Querschnitt und Rippen zur Reduzierung der Reibung,
Fig. 12 eine Rolloanordnung mit taschenförmigem Rand einer Rollobahn und einem durchgenähtem Führungsband;
Fig. 13 eine Rolloanordnung mit umgenähtem Rand einer Rollobahn und einem durchgenähtem Führungsband;
Fig. 14 einen Gesamtquerschnitt durch die Führung der Fig. 13;
Fig. 15 ein Führungsband mit Hohlniet zur Befestigung eines Gleiters;
Fig. 16 einen Querschnitt durch ein Führungsband mit Gleiter; und
Fig. 17 eine Rolloanordnung, bei der die Führungsbänder gleichzeitig auch als Wickelrolle dienen.

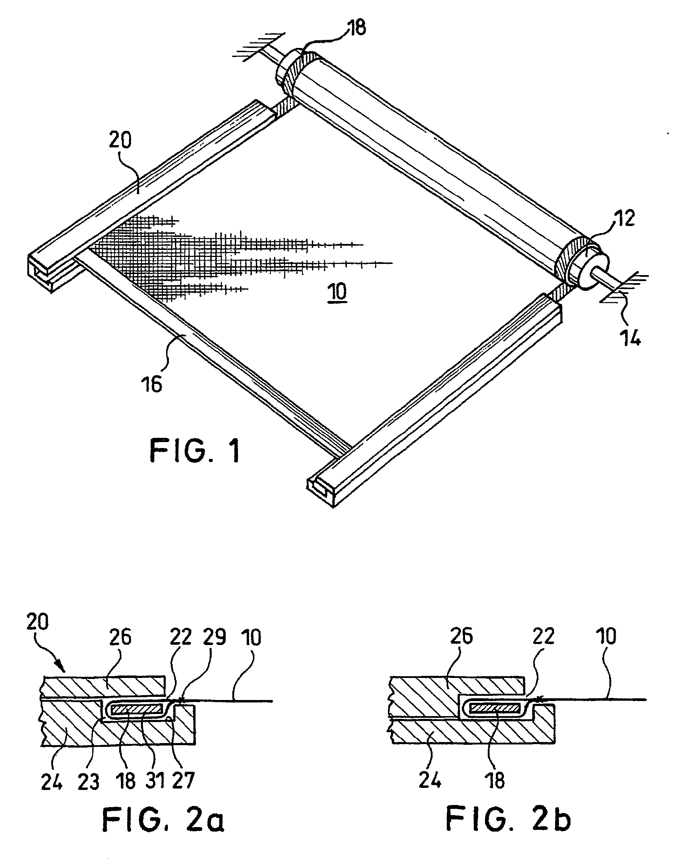

Fig.1 zeigt eine erfindungsgemäße Rolloanordnung mit einer Rollobahn 10, die von einem Wickelrohr 12 auf- und abgewickelt und somit entlang zweier Führungen 20 bewegt werden kann. Das Wickelrohr 12 ist mittels karosseriefester Lager 14 drehbar gelagert und an dem dem Wickelrohr abgewandten Ende der Rollobahn 10 ist diese an einem Zugspriegel 16 befestigt. In den Führungen 20 beidseitig der Rollobahn 10 ist jeweils ein Führungsband 18 geführt, welches mit der Rollobahn verbunden ist und zusammen mit ihr auch auf das Wickelrohr 12 gewickelt wird. Die beidseitigen Führungsbänder 18 sind dabei so in den Führungen 20 geführt, dass durch eine hier nicht näher dargestellte Öffnung zwar die Rollobahn 10 aus der Führung 20 austreten kann, nicht jedoch die beiden Führungsbänder 18. Bei entsprechendem Abstand der beiden Führungen 20 an den beiden Seitenkanten der Rollobahn 20 im Vergleich zur Breite der Rollobahn kann nun die Rollobahn selbst quer zu ihrer Ausziehrichtung so gespannt werden, dass beispielsweise ein Flattern der Rollobahn vermieden wird. Dies ist insbesondere dann vorteilhaft, wenn die Rollobahn 10 dazu dient, eine Dachöffnung im Bereich eines Fahrzeugdachs abzuschatten, und die Dachöffnung teilweise geöffnet ist, sodass ein Luftzug auf die Rollobahn 10 auftreffen kann.

Details zur Ausführung der Führung 20 aus Fig. 1 sind in zwei alternativen Ausführungsformen in den Fign. 2a und 2b im Querschnitt gezeigt. Bei der Variante der Fig. 2a besteht die Führung 20 aus einem Unterteil 24, welches als Führungsschiene ausgebildet ist, und einem geraden Deckel 26, der das Unterteil bis auf einen Austrittsspalt 22 verschließt. Die Führung 20 bildet so einen Führungskanal 23 mit einem Boden 27, welcher in einer Ebene liegt, die parallel zur aufgespannten Rollobahn 10 verläuft. Im Führungskanal 23 ist das Führungsband 18 verschiebbar geführt, wobei das Führungsband selbst mit der Rollobahn 10 in Verbindung steht, indem die Rollobahn um das Führungsband taschenförmig herumgeführt und in einer Naht 29 vernäht ist. Der Führungskanal 23 weist hier eine lichte Höhe auf, die geringfügig größer ist als die Höhe des Führungsbandes 18 zusammen mit der Tasche der Rollobahn 10. Unterteil 24 und Deckel 26 können miteinander verschraubt, verklippst oder verklebt sein oder bei alternativen Ausführungsformen ihre Lage gegeneinander vertauscht haben. Der Vorteil einer solchen Ausführungsform ist unter anderem, dass sowohl Unterteil 24 als auch Deckel 26 über ihre gesamte Länge den gleichen Querschnitt aufweisen und somit relativ einfach extrudiert (stranggepresst) werden können. Bei einer alternativen Ausführungsform können Unterteil 24 und Deckel 26 auch einteilig hergestellt sein. Dann können Deckel und Unterteil entweder vor dem Einlegen des Führungsbands Rollobahn zunächst aufbogen sein und nach dem Einlegen so zusammengebogen werden, dass ein Austrittsspalt mit entsprechend dimensionierter Öffnung bestehen bleibt. Alternativ wird das Führungsband mit der Rollobahn in die einteilige Führung eingefädelt.

Erfindungsgemäß ist nun die Öffnung des Austrittsspalts 22 so bemessen, dass zwar die Rollobahn 10 aus der Führung 20 heraustreten kann, nicht jedoch das an der Rollobahn befestigte Führungsband 18. Eine Grundfläche 31 des Führungsbands 18 bleibt dabei sowohl in dem hier dargestellten, ausgezogenen Bereich der Rollobahn 10, als auch auf dem Wickelrohr 12 parallel zur benachbarten Rollobahn.

Bei der in der Fig. 2b abgebildeten alternativen Ausführungsform der Führung 20 sind sowohl Unterteil 24 als auch Deckel 26 L-Profile, die so geformt und zusammengebaut werden, dass entsprechend wiederum ein Austrittsspalt 22 frei bleibt, durch den (ähnlich wie in Fig. 2a) die Rollobahn 10 aus der Führung 20 heraustreten kann.

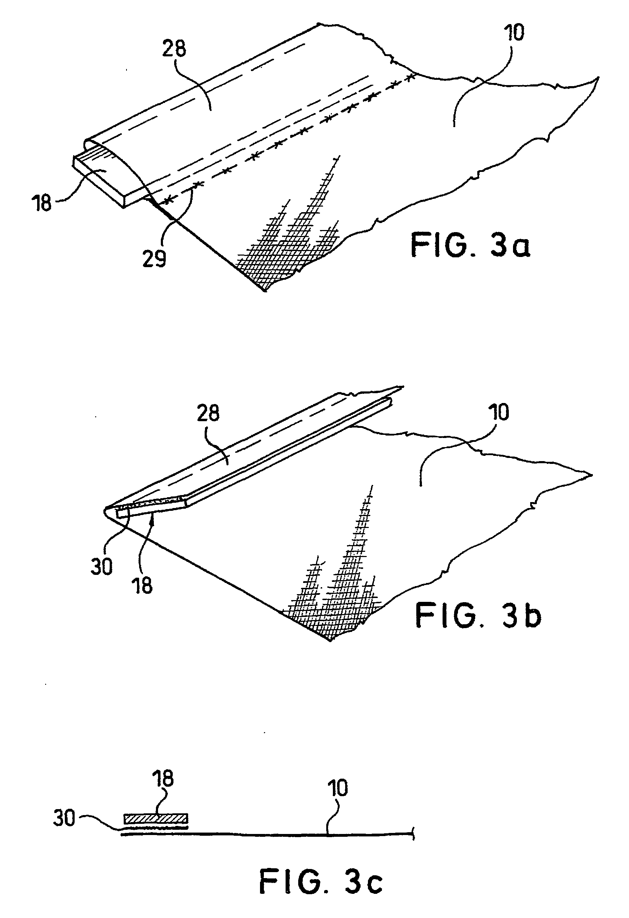

Die Figuren. 3a, 3b und 3c zeigen drei alternative Ausführungsformen zur Befestigung eines Führungsbands 18 an einer Rollobahn 10. Bei der Ausführungsform der Fig. 3a ist die Rollobahn 10 seitlich gefalzt und bildet somit einen Umschlag 28. Der Rand oder die Kante des Umschlags 28 ist mit der Rollobahn 10 durch eine Naht 29 verbunden. Alternativ kann dieser Rand jedoch auch verklebt oder mit der Rollobahn 10 verschweißt sein. Durch den taschenförmigen Umschlag 28 der Rollobahn 10 ist gewährleistet, dass diese seitlich durch das Führungsband 18, welches im Umschlag eingeschlossen ist, geführt wird. Somit kann das Führungsband 18 der Rollobahn 10 quer zu dessen Ausziehrichtung spannen.

In der in Fig. 3b gezeigten Ausführungsform weist eine Rollobahn 10 zwar ähnlich wie die aus Fig. 3a einen Umschlag 28 auf, dessen Rand ist jedoch nicht mit der Rollobahn vernäht oder auf andere Art und Weise fest verbunden. In dem falzartigen Umschlag 28 ist wiederum ein Führungsband 18 eingelegt und in diesem Fall mittels eines Klebers 30 mit der Rollobahn 10 verbunden. Bei dem Kleber 30 kann es sich beispielsweise um eine Schicht eines Flüssigklebers oder auch um ein beidseitiges Klebeband handeln. Dieser Kleber 30 kann bei einer weiteren alternativen Ausführungsform der Erfindung, die nicht gezeigt ist, auch entfallen. Das Führungsband 18 wird dann nur noch durch die Klemmwirkung des falzartigen Umschlags 28 einerseits und den Anpressdruck der einzelnen Stofflagen der Rollobahn 10 auf dem (in den Fign. 3a bis 3c nicht gezeigten) Wickelrohr gehalten.

Eine weitere alternative Ausführungsform der Fixierung eines Führungsbandes 18 auf einer Rollobahn 10 ist in Fig. 3c gezeigt, wobei hier die Rollobahn keinen Umschlag oder Falz aufweist und das Führungsband ausschließlich über einen Kleber 30 mit der Rollobahn verbunden ist.

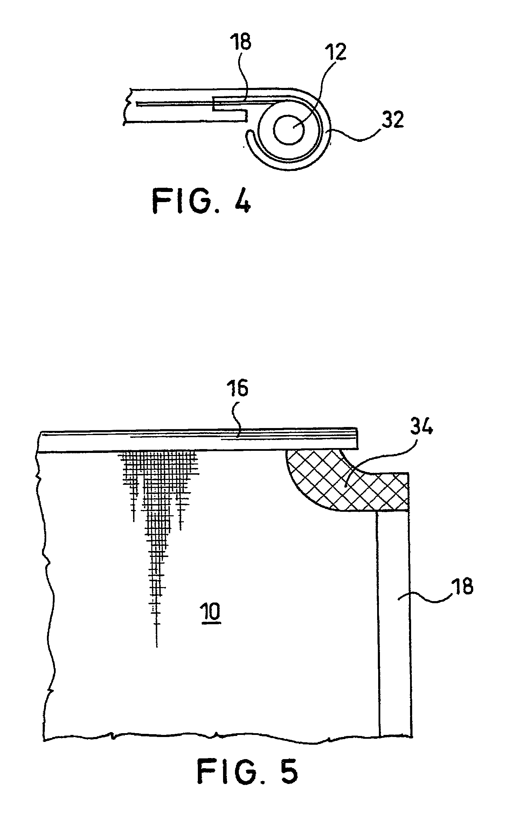

Fig. 4 zeigt eine Ausführungsform der Erfindung mit einer Teilansicht auf ein Wickelrohr 12 mit einer das Wickelrohr teilweise umfassenden Führung 32 von der Seite. Bei dieser alternativen Ausführungsform der Erfindung dient ein Führungsband 18 nicht nur einer seitlichen Führung einer Rollobahn, um die Rollobahn quer zu ihrer Auszugsrichtung zu spannen, sondern das Führungsband dient gleichzeitig als Antriebsmedium für die Rollobahn. Dies setzt voraus, dass das Führungsband 18 nicht nur seitlich der ausgezogenen Rollobahn drucksteif geführt ist, wie es beispielsweise in den Fign. 2a und 2b gezeigt ist, sondern bei einem Antrieb der Rollobahn über das Wickelrohr 12 muss auch eine entsprechende drucksteife Führung des Führungsbands des bzw. der Führungsbänder um das Wickelrohr herum gewährleistet sein. Diese druckstiefe Führung des Führungsbands 18 wird durch die gezeigte Führung 32, welche das Wickelrohr 12 klauenförmig teilumfasst, gewährleistet. Bei dieser Ausführungsform der Erfindung ist besonders vorteilhaft, dass sowohl die Seitenführung als auch das Antriebsmedium durch das Führungsband 18 der Rollobahn ausgebildet sind. Ein zusätzliches Antriebsmedium wie z.B. ein drucksteifes Kabel oder ein drucksteif geführter Zahnriemen entfallen somit.

Fig. 5 zeigt eine Rollobahn 10, die im Eckbereich benachbart zu einem Zugspriegel 16 und einem Führungsband 18 eine Verstärkung 34 aufweist. Diese Verstärkung 34 dient dazu, die Scherkräfte, die auf die Rollobahn 10 in diesem Eckbereich wirken, zu vermindern. Solche Scherkräfte können insbesondere dann auftreten, wenn beim Ausziehen der Rollobahn 10 mittels des Zugspriegels 16 das Führungsband 18 sich in einer hier nicht dargestellten Führung leicht verkantet oder wenn beispielsweise das Führungsband 18 drucksteif geführt auch als Antriebsmedium für die Rolloanordnung dient bzw. auch bei Ausführungsformen bei denen das Führungsband 18 als Konstantkraftfeder ausgebildet ist. Bei der letzt genannten Ausführungsform dient das Führungsband 18 neben seiner Funktion als Seitenführung für die Rollobahn 10 auch als Rückstellfeder für die Rollobahn, um diese in jeder Auszugsposition auch entlang der Ausziehrichtung gespannt zu halten. Wie in der Fig. 5 abgebildet, kann dabei die Verstärkung 34 an der Rollobahn 10 angebracht sein und gleichzeitig das Führungsband 18 direkt mit dem Zugspriegel 16 verbinden. Somit ist ein Kraftschluss zwischen dem Führungsband 18 und dem Zugspriegel 16 direkt gegeben. Alternativ kann eine entsprechende Verstärkung bei einem solchen Eckbereich der Rollobahn auch angebracht werden, ohne dass die Verstärkung selbst direkt mit Zugspriegel oder Führungsbahn verbunden ist. Insbesondere bei einem länglichen (in Ausziehrichtung des Rollos gestreckten) Verstärkungselement, welches nur mit der Rollobahn in Verbindung steht, können auch so die Scherkräfte entlang der Rollobahn verteilt und ein Abreissen der Rollobahn und des Führungsbands 18 vermieden werden.

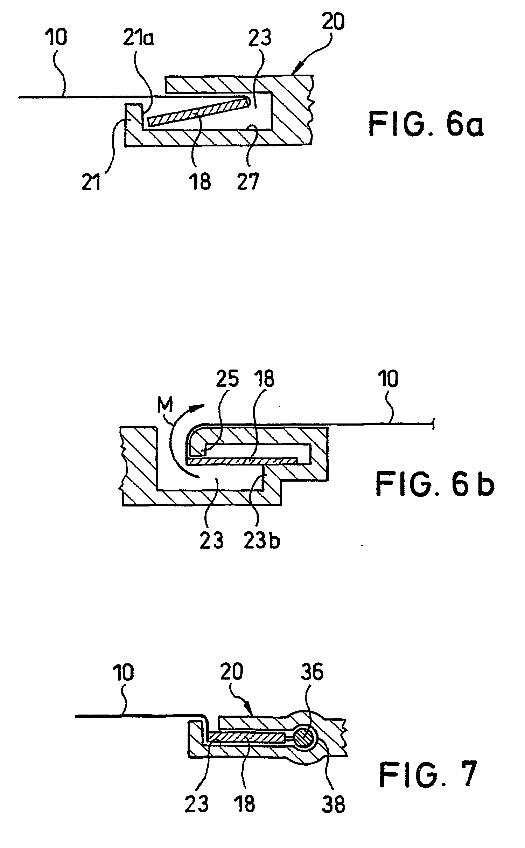

Fig. 6a zeigt eine Querschnittsansicht einer herkömmlichen Führung 20 für ein Führungsband 18 mit einer am Führungsband befestigten Rollobahn 10. Das Führungsband 18 ist hier wiederum wie in Fig. 3b in einen Randumschlag der Rollobahn 10 eingeklebt. Ein Führungskanal 23 der Führung 20 für das Führungsband 18 weist hier jedoch im Gegensatz zu den Führungen der Figuren 2a und 2b eine wesentlich grössere lichte Höhe auf, als das darin enthaltene Führungsband 18 zusammen mit der Rollobahn 18. Damit wird erreicht, dass das Führungsband 18 durch die Zugspannung der Rollobahn 10 innerhalb des Führungskanals, der selbst mit seinem Boden (wie bei den Figuren 2a und b) parallel zur Rollobahn verläuft, verkippt wird. Ein solches Verkippen sichert das Führungsband 18 zusätzlich gegen ein Herausgleiten aus der Führung 20. Dieser Effekt kann noch verstärkt werden, wenn ein Steg 21 der Führung 20 nicht wie hier gezeigt eine senkrechte Innenfläche 21a aufweist, sondern diese Innenfläche zum Führungsband 18 hin gekippt ist.

Fig. 6b zeigt eine Ausführungsform der Erfindung, bei der ein Führungsband 18 in einem Führungskanal 23 geführt wird und eine gespannte Rollobahn 10 das Führungsband mit einem Drehmoment M (siehe Pfeilrichtungen) beaufschlagt, welches um einen Drehpunkt vorteilhafterweise in der Nähe der Mitte des Führungsbandes wirkt. Das Führungsband 18 stützt sich dabei an einer Rippe 25 in der Nähe der Rollobahn sowie einer Kante oder Stufe 23b des Führungskanals 23 ab und ist so gegen ein Verdrehen gesichert.

Eine in Fig. 7 abgebildete Führung 20 weist eine Kabelführung 38 auf, in der ein separates Antriebskabel 36 geführt ist. Dieses ist mit einem Führungsband 18, welches wiederum eine Rollobahn 10 führt, verbunden. Hierzu ist ein Führungskanal 23, in der das Führungsband 18 verläuft, zur Kabelführung 38 hin offen. Somit wird hier eine Antriebeskraft eines nicht abgebildeten Antriebs durch das Antriebeskabel 36 und nicht durch das Führungsband 18 allein auf die Rollobahn 10 oder gegebenenfalls einen Zugspriegel übertragen.

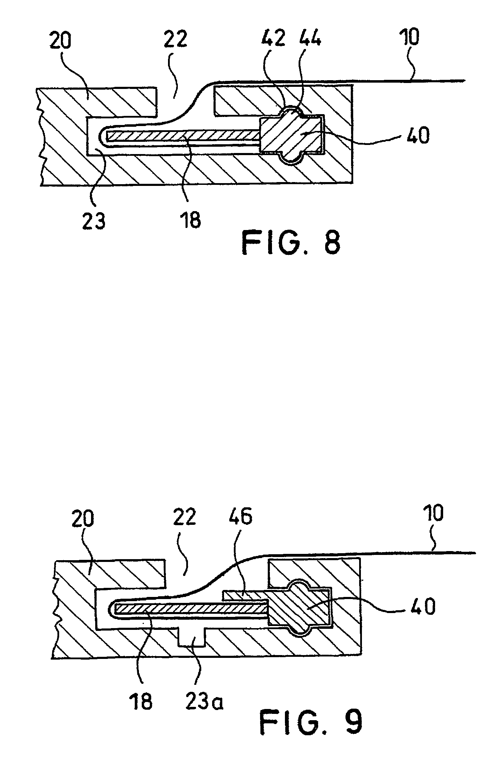

In Fig. 8 ist ein Führungsband 18 abgebildet, welches über einen Gleitschiene 40 in gleitendem Kontakt mit einer Führung 20 steht. Die Gleitschiene 40 ist in die Führung 20 eingelegt und wird vorteilhafterweise an dieser befestigt. Bei entsprechender Auswahl der Materialien von Gleitschiene 40 und Führung 20 können so die Gleiteigenschaften verbessert werden. Die Führung 20 weist innerhalb eines Führungskanals 23 oberhalb und unterhalb der Gleitschiene 40 jeweils eine Nut 42 auf, in die jeweils ein Wulst 44 der Gleitschiene eingreift. Dadurch wird eine Bewegung der Gleitschiene quer zu Auszugsrichtung des Führungsbands 18 verhindert. Am Führungsband 18 ist eine Rollobahn 10 befestigt, die den Führungskanal durch einen Austrittsspalt 22 verlässt.

Fig. 9 zeigt eine Anordnung ähnlich der aus der Fig. 8, wobei hier eine Gleitschiene 40 zusätzlich einen Vorsprung 46 aufweist, welcher einen Austrittsspalt 22 teilweise abdeckt, sodass dessen effektive Öffnung verringert wird. So kann eine Führung 20 mit größerer Öffnung des Austrittsspalts 22 und damit besserem Zugang zu einem darin geführten Führungsband 18 realisiert werden, ohne dass das Führungsband im Betrieb einen Führungskanal 23 verlassen kann. Der Führungskanal 23 weist eine Nut 23a auf, welche ein Antriebskabel aufnehmen und ferner als Schmutzkanal dienen kann.

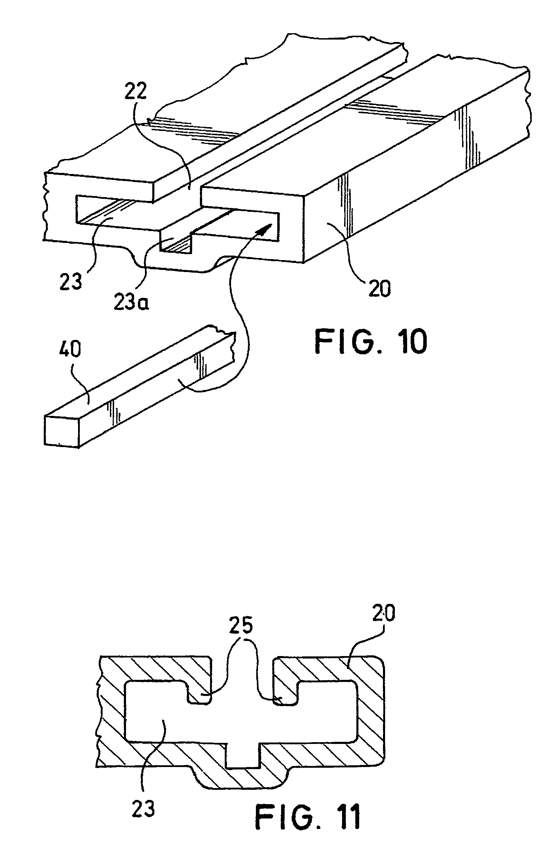

Fig. 10 zeigt die perspektivische Querschnittsansicht einer Führung 20 mit einem kreuzförmigen Führungskanal 23. Der Führungskanal 23 weist gegenüber einem nach oben geöffneten Austrittspalt 22 eine Nut 23a nach unten auf, welche (ähnlich wie in der Fig. 9) ein Antriebskabel aufnehmen kann. Wie mit einem Pfeil angedeutet, wird bei der Montage in den Führungskanal 23 auf der Seite, die der Rollobahn zugewandt ist, eine Gleitschiene 40 eingelegt, um die Reibung zwischen einem (hier nicht dargestellten) Führungsband und der Führung 20 zu reduzieren. Alternativ kann eine solche Gleitschiene 40 auch auf beiden Seiten des Führungskanals 23 angeordnet sein.

In Fig. 11 ist ein Querschnitt durch eine Führung 20 gezeigt, bei der ein Führungskanal 23 ähnlich wie in Fig. 10 eine kreuzförmige Grundform aufweist, jedoch sind hier zusätzlich Rippen 25 an die Führung angeformt, welche die Auflagefläche eines (hier nicht dargestellten) Führungsbandes an der Führung verringern, um so die Gleiteigenschaften des Führungsbandes in der Führung zu verbessern.

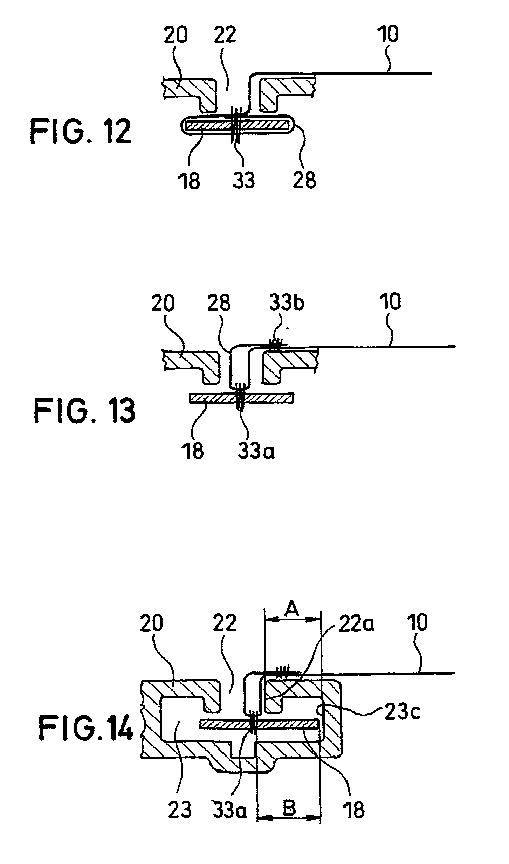

Die Fig. 12 und 13 zeigen weitere Varianten zur Befestigung eines Führungsbandes 18 an einer Rollobahn 10, bei denen durch das Führungsband eine Naht verläuft. Diese Befestigungsart kommt insbesondere für flexible, weiche Führungsbänder aus Kunststoff in Betracht. Bei den Ausführungsformen der Fig. 12 und 13 wird dabei mittels einer Naht 33 bzw. 33b ein Umschlag 28 der Rollobahn 10 gebildet. In der Ausführungsform der Fig. 12 ist das Führungsband in diesen Umschlag 28 eingeschoben und gleichzeitig mit der Naht 33 fixiert. Dagegen wird bei der Ausführungsform der Fig. 13 das Führungsband mit einer zweiten Naht 33a an einer Kante des Umschlags 28 angenäht. Bei der letztgenannten Variante gleitet das Führungsband 18 direkt auf der Führung 20, sodass hier die Rollobahn 10 nicht zwischen Führungsband und Führung durchgerieben werden kann.

Fig. 14 zeigt den kompletten Querschnitt durch den Führungskanal der Ausführungsform der Fig. 13. Wie Fig. 14 zu entnehmen ist, kann der Abstand B der Naht 33a zur Seitenkante des Führungsbands etwas größer gewählt werden als der Abstand A eines Rands 22a des Austrittsspalts 22 zur einer ihm zugeordneten Innenfläche 23c des Führungskanals 23. So wird vermieden, dass die Rollobahn 10 an der Innenfläche 23c durchgescheuert wird. Allgemein kann der Anpressdruck von Rollobahn 10 an den Rand 22a und Führungsband 18 an die Innenfläche 23c der Führung 20 durch entsprechende Dimensionierung dieser Abstände A und B eingestellt werden.

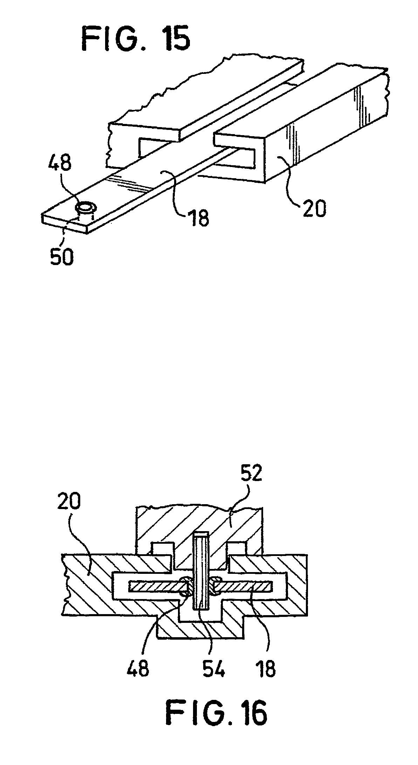

Wie ein Führungsband beispielsweise an eine Rollobahn, einen Gleiter oder an einen Zugspriegel angebunden werden kann, soll im Folgenden anhand der Fig. 15 und 16 erläutert werden. Fig. 15 zeigt dabei ein Führungsband 18 in einer Führung 20 in perspektivischer Ansicht, wobei das Führungsband an seinem einem Zugspriegel oder einem Ausziehende einer Rollobahn zugewandten Ende in einer Bohrung 50 eine Hohlniet 48 aufweist, mittels dem oder durch den die Anbindung erfolgt. Selbstverständlich kann eine Anbindung an die Bohrung 50 auch anderweitig erfolgen, z.B. durch eine Verschraubung.

Fig. 16 zeigt ein Führungsband 18 in einer Führung 20, wobei auch hier das Führungsband einen Hohlniet 48 zur Anbindung aufweist. Zur Anbindung des Führungsbandes 18 an einen Gleiter 52 steckt in diesem ein Stift 54, der ebenfalls durch den Hohlniet 48 geführt ist. Somit ist eine kraftschlüssige Verbindung zwischen Führungsband 18 und Gleiter 52 gewährleistet. Mit dem Gleiter 52 kann weiterhin ein Zugspriegel (hier nicht abgebildet) in Verbindung stehen, um das Führungsband 18 und damit eine Rollobahn auszufahren bzw. einzurollen.

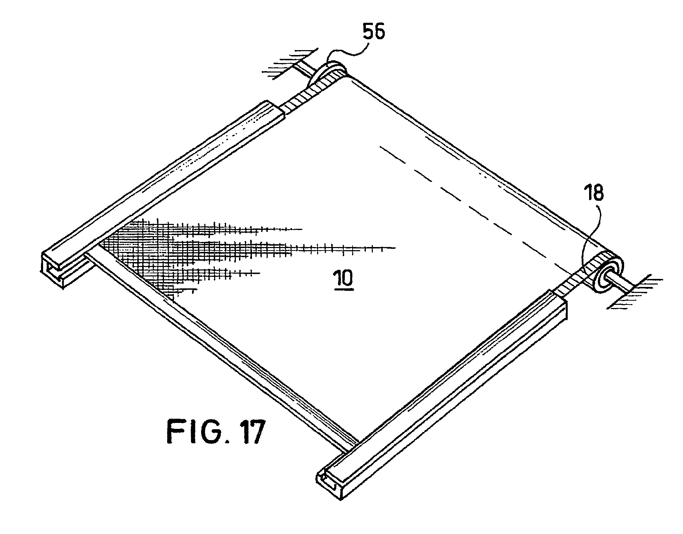

Eine Ausführungsform einer Rolloanordnung ohne separates Wickelrohr ist in der Fig. 17 gezeigt. Hierbei dienen zwei Führungsbänder 18, weiche beiderseits einer Rollobahn 10 angebracht sind, gleichzeitig als Wickelrohre, als Führungselemente, als drucksteife Antriebselemente und als Rückstellfedern. Die Führungsbänder 18 sind Konstantkraftfedern aus Metall, welche spiralförmig aufgewickelt bzw. abgewickelt werden können, um die Rollobahn 10 zu bewegen. Hierzu können sie mit einem (hier nicht gezeigten) Zugspriegel am Ende der Rollobahn 10 in Verbindung stehen. Somit ersetzen die als Konstantkraftfedern ausgebildeten Führungsbänder 18 einerseits die bisher bekannten, zusätzlichen Federelemente (z.B. Torsionsfedern) zum Zurückziehen der Rollobahn 12, während andererseits ihr aufgewickelter Bereich bisher bekannte, separate Wickelrollen ersetzt. Beiderseits der aufgewickelten Rollobahn können zwei Scheiben 56, von denen in Fig. 17 nur eine gezeigt ist, vorgesehen sein, die als Führungen beim Wickelvorgang dienen.

### Bezugszeichenliste

- 10: Rollobahn
- 12: Wickelrohr
- 14: Lager
- 16: Zugspriegel
- 18: Führungsband
- 20: Führung
- 21: Steg
- 21a: Innenfläche
- 22: Austrittsspalt
- 22a: Rand
- 23: Führungskanal
- 23 a: Nut
- 23 b: Stufe
- 23 c: Innenfläche
- 24: Unterteil
- 25: Rippe
- 26: Deckel
- 27: Boden
- 28: Umschlag
- 29: Naht
- 30: Kleber
- 31: Grundfläche
- 32: Führung
- 33 a, b: Naht
- 34: Verstärkung
- 36: Antriebskabel
- 38: Kabelführung
- 40: Gleitschiene
- 42: Nut
- 44: Wulst
- 46: Vorsprung
- 48: Hohlniet
- 50: Bohrung
- 52: Gleiter
- 54: Stift

## Patentansprüche

1. Rolloanordnung für ein Fahrzeug mit mindestens einer Rollobahn (10) und mindestens einem Wickelrohr (12) zum Auf- und Abwickeln der Rollobahn, wobei die Rollobahn entlang beider seitlichen Randbereiche jeweils mindestens ein flexibles, flaches Führungsband (18) aufweist, welches sich entlang der Ausziehrichtung des Rollos erstreckt und welches in einer Führung (20) geführt ist, die Führung eine Kulisse beinhaltet, in der das Führungsband geführt ist und welche eine Austrittsspalte (22) aufweist, durch die die Rollobahn aus der Führung austritt, wobei das Führungsband so geführt ist, dass dessen Grundfläche (31) im Wesentlichen parallel zu benachbarten Bereich der Rollobahn geführt ist und Formgebung und Dimensionierung von Austrittsspalte und Führungsbahn so bemessen sind, dass das Führungsband nicht von selbst aus der Führung austreten kann, wobei das Führungsband (18) in einem Führungskanal (23) innerhalb der Führung (20) geführt ist, wobei ein Boden (27) des Führungskanals in einer Ebene parallel zur ausgezogenen Rollobahn (10) verläuft, **dadurch gekennzeichnet, dass** die Öffnung des Austrittsspalts (22) kleiner ist als die Breite der Grundfläche (31) des Führungsbands (18) und der Querschnitt des Führungsbands an mindestens zwei Punkten (25, 23b) am Führungskanal (23) gegen eine Verdrehung seiner Längsachse abgestützt ist, und die Rollobahn (10) im Bereich des Seitenrands des Führungsbands (18) fixiert ist.

2. Rolloanordnung gemäß einem der vorhergehenden Ansprüche, **dadurch gekennzeichnet, dass** das Führungsband (18) auf mindestens einer Rippe (25) der Führung (20) gleitet.

3. Rolloanordnung gemäß einem der vorhergehenden Ansprüche, **dadurch gekennzeichnet, dass** zwischen der Führung (20) und dem Führungsband (18) eine Gleitschiene (40) angebracht ist, die mit der Führung fest verbunden ist, und mit der das Führungsband in gleitendem Kontakt steht.

4. Rolloanordnung gemäß Anspruch 3, **dadurch gekennzeichnet, dass** die Gleitschiene (50) aus Kunststoff besteht.

5. Rolloanordnung gemäß Anspruch 3, **dadurch gekennzeichnet, dass** die Gleitschiene (40) aus Metall besteht.

6. Rolloanordnung gemäß einem der vorhergehenden Ansprüche, **dadurch gekennzeichnet, dass** die Führung (20) aus Aluminium besteht.

7. Rolloanordnung gemäß einem der vorhergehenden Ansprüche, **dadurch gekennzeichnet, dass** zwischen dem Führungsband (18) und der Führung (20) ein Federelement eingebracht ist.

8. Rolloanordnung gemäß Anspruch 7, **dadurch gekennzeichnet, dass** das Federelement aus einem Schaumstoff besteht.

9. Rolloanordnung gemäß Anspruch 7, **dadurch gekennzeichnet, dass** das Federelement aus Federstahl besteht.

10. Rolloanordnung gemäß einem der vorhergehenden Ansprüche, **dadurch gekennzeichnet, dass** das Führungsband (18) beim Aufwickeln der Rollobahn (10) zusammen mit dieser auf dem Wickelrohr (12) aufgewickelt wird.

11. Rolloanordnung gemäß einem der vorhergehenden Ansprüche, **dadurch gekennzeichnet, dass** die Rollobahn (10) im jeweiligen Randbereich parallel zum Führungsband (18) umgeschlagen ist, und das Führungsband innerhalb dieses Umschlags (28) verläuft.

12. Rolloanordnung nach Anspruch 11, **dadurch gekennzeichnet, dass** der den Umschlag (28) bildende Rand der Rollobahn (10) mit der Rollobahn verbunden ist und so eine Tasche ausbildet.

13. Rolloanordnung nach Anspruch 11 oder 12, **dadurch gekennzeichnet, dass** das Führungsband (18) in dem Umschlag (28) eingeklebt ist.

14. Rolloanordnung gemäß einem der vorhergehenden Ansprüche 1 bis 10, **dadurch gekennzeichnet, dass** das Führungsband (18) auf der Rollobahn (10) aufgeklebt ist.

15. Rolloanordnung gemäß einem der vorhergehenden Ansprüche 1 bis 10, **dadurch gekennzeichnet, dass** das Führungsband (18) an die Rollobahn (10) anextrodiert ist.

16. Rolloanordnung gemäß einem der vorhergehenden Ansprüche 1 bis 10, **dadurch gekennzeichnet, dass** das Führungsband (18) mittels einem Spritzgussverfahren an die Rollobahn (10) angespritzt ist.

17. Rolloanordnung gemäß einem der vorhergehenden Ansprüche 1 bis 10, **dadurch gekennzeichnet, dass** das Führungsband (18) auf die Rollobahn (10) aufgeschweißt ist.

18. Rolloanordnung gemäß Anspruch 17, **dadurch gekennzeichnet, dass** zwischen Führungsband (18) und Rollobahn (10) eine Folie als Haftvermittler eingebracht ist.

19. Rolloanordnung gemäß einem der vorhergehenden Ansprüche, **dadurch gekennzeichnet, dass** die Führung (20) aus einem Unterteil (24) und einem Deckel (26) besteht.

20. Rolloanordnung gemäß einem der vorhergehenden Ansprüche 1 bis 18, **dadurch gekennzeichnet, dass** die Führung (20) einteilig ausgeführt ist und eine Biegelinie aufweist, die so ausgeführt ist, dass die Führung entlang dieser Biegelinie zugebogen werden kann.

21. Rolloanordnung gemäß einem der vorhergehenden Ansprüche, **dadurch gekennzeichnet, dass** das Führungsband (18) aus Metall gefertigt ist.

22. Rolloanordnung gemäß einem der vorhergehenden Ansprüche 1 bis 20, **dadurch gekennzeichnet, dass** das Führungsband (18) aus einem Metallband besteht, welches mit Kunststoff umspritzt ist.

23. Rolloanordnung gemäß einem der vorhergehenden Ansprüche 1 bis 20, **dadurch gekennzeichnet, dass** das Führungsband (18) aus Kunststoff gefertigt ist.

24. Rolloanordnung gemäß Anspruch 22 oder 23, **dadurch gekennzeichnet, dass** der Kunststoff mit Glasfasern verstärkt ist.

25. Rolloanordnung gemäß einem der vorhergehenden Ansprüche, **dadurch gekennzeichnet, dass** die Rolloanordnung ferner einen Zugspriegel (16) aufweist, der in einer Zugspriegelführung geführt ist, und die Zugspriegelführung und die Führung (20) des Führungsbands in einer gemeinsamen Führungsschiene enthalten sind.

26. Rolloanordnung gemäß Anspruch 25, **dadurch gekennzeichnet, dass** in einem der Zugspriegel (16) und dem Führungsband (18) benachbarten Eckbereich der Rollobahn (10) diese ein Verstärkungselement (34) aufweist.

27. Rolloanordnung gemäß Anspruch 26, **dadurch gekennzeichnet, dass** das Verstärkungselement (34) den Zugspriegel (16) mit dem Führungsband (18) verbindet.

28. Rolloanordnung gemäß Anspruch 26, **dadurch gekennzeichnet, dass** das Verstärkungselement (34) ohne Verbindung zu Zugspriegel (16) und Führungsband (18) an der Rollobahn (10) angebracht ist.

29. Rolloanordnung gemäß einem der vorhergehenden Ansprüche, **dadurch gekennzeichnet, dass** die Anordnung einen Antrieb aufweist und das Führungsband (18) so mit dem Antrieb in Verbindung steht, dass der Antrieb die Rollobahn (10) über das Führungsband abwickeln kann.

30. Rolloanordnung gemäß Anspruch 29, **dadurch gekennzeichnet, dass** das Führungsband (18) drucksteif geführt ist.

31. Rolloanordnung gemäß einem der vorhergehenden Ansprüche 1 bis 28, **dadurch gekennzeichnet, dass** die Anordnung einen Antrieb aufweist sowie ein Antriebskabel (36) und das Antriebskabel so mit dem Antrieb und der Rollobahn (10) in Verbindung steht, dass der Antrieb die Rollobahn über das Antriebskabel abwickeln kann.

32. Rolloanordnung gemäß Anspruch 31, **dadurch gekennzeichnet, dass** das Antriebskabel in einer Kabelführung (38) geführt ist, die zusammen mit der Führung (20) des Führungsbands (18) in einer gemeinsamen Führungsschiene enthalten ist.

33. Rolloanordnung nach einem der vorhergehenden Ansprüche, **dadurch gekennzeichnet, dass** die Rollobahn mit dem Wickelrohr über mindestens eine Konstantkraftfeder in Verbindung steht, welche ein spiralförmig gewickeltes Federelement aus einem Flachband (18) beinhaltet, dessen eines Ende mit dem Wickelrohr verbunden ist.

34. Rolloanordnung nach einem der Ansprüche 1 bis 32, **dadurch gekennzeichnet, dass** das mindestens eine Wickelrohr von einer Konstantkraftfeder gebildet ist, mit der die Rollobahn in Verbindung steht und in die ein spiralförmig gewickeltes Federelement aus einem Flachband (18) beinhaltet, dessen innen liegendes Ende in jeder Betriebsstellung der Rolloanordnung mindestens eine Wicklung zum Aufwickeln der Rollobahn bildet.

35. Rolloanordnung gemäß Anspruch 33 oder 34, **dadurch gekennzeichnet, dass** ferner ein Zugspriegel (16) vorgesehen ist, der mit dem von dem Wickelrohr (12) abgewandten Ende der Rollobahn sowie mit dem äußeren Ende der Konstantkraftfeder (18) verbunden ist.

36. Rolloanordnung gemäß einem der Ansprüche 33 bis 35, **dadurch gekennzeichnet, dass** die Rolloanordnung ferner einen Antrieb aufweist und die Konstantkraftfeder (18) so mit dem Antrieb in Verbindung steht, dass sie zum Ausfahren der Rollobahn (10) durch den Antrieb abgewickelt werden kann.

37. Rolloanordnung gemäß einem der Ansprüche 34 bis 36, **dadurch gekennzeichnet, dass** das die Konstantkraftfeder bildende Flachband (18) im Bereich der ausgezogenen Rollobahn (10) in einer linearen Führung (20) geführt ist.

38. Rolloanordnung gemäß Anspruch 37, **dadurch gekennzeichnet, dass** der Zugspriegel (16) in einer Zugspriegelführung geführt ist und die Zugspriegelführung und die Führung (20) des Flachbands (18) in einer gemeinsamen Führungsschiene enthalten sind.

39. Rolloanordnung gemäß einem der Ansprüche 33 bis 38, **dadurch gekennzeichnet, dass** das Flachband (18) aus Metall besteht.

40. Rolloanordnung gemäß einem der Ansprüche 33 bis 39, **dadurch gekennzeichnet, dass** der Zugspriegel (18) mit einer Bremsvorrichtung konstanter Bremskraft in Verbindung steht, die so ausgebildet ist, dass sie Zugspriegel und Rollobahn (10) in jeder beliebigen Position feststellen kann.

41. Rolloanordnung gemäß einen der sowohl auf Anspruch 1 als auch auf einen der Ansprüche 33 oder 34 rückbezogenen Ansprüche, **dadurch gekennzeichnet, dass** das Flachband der Konstantkraftfeder gleichzeitig als Führungsband (18) dient.

## Claims

1. Roller blind system for a vehicle, having at least one roller blind web (10) and at least one winding tube (12) for winding the roller blind web up and down, the roller blind web having at least one flexible flat guide strip (18) each along both lateral edge regions, which guide strip (18) extends in the deployment direction of the roller blind and is guided in a guide track (20), the guide track containing a guide slot in which the guide strip is guided and which has an exit gap (22) through which the roller blind web exits the guide, wherein the guide strip is guided such that its base surface (31) is guided substantially parallel to the adjacent region of the roller blind web and the shaping and dimensioning of the exit gap and the guide track are configured such that the guide strip by itself cannot exit the guide track, wherein the guide strip (18) is guided in a guide channel (23) within the guide track (20), wherein a bottom (27) of the guide channel extends in a plane which is parallel to the deployed roller blind web (10), **characterized in that** the opening of the exit gap (22) is smaller than the width of the base surface (31) of the guide strip (18) and the cross section of the guide strip is supported at at least two points (25, 23b) on the guide channel (23) to counter a twisting of its longitudinal axis, and the roller blind web (10) is affixed in the region of the lateral edge of the guide strip (18).

2. Roller blind system according to Claim 1, **characterized in that** the guide strip (18) slides on at least one rib (25) of the guide track (20).

3. Roller blind system according to one of the preceding claims, **characterized in that** a slide rail (40) is attached between the guide track (20) and the guide strip (18), said slide rail (40) being fixedly connected to the guide track and the guide strip being in a sliding contact with said slide rail (40).

4. Roller blind system according to Claim 3, **characterized in that** the slide rail (40) consists of plastic.

5. Roller blind system according to Claim 3, **characterized in that** the slide rail (40) consists of metal.

6. Roller blind system according to one of the preceding claims, **characterized in that** the guide track (20) consists of aluminium.

7. Roller blind system according to one of the preceding claims, **characterized in that** a spring element is placed between the guide strip (18) and the guide track (20).

8. Roller blind system according to Claim 7, **characterized in that** the spring element consists of a foamed material.

9. Roller blind system according to Claim 7, **characterized in that** the spring element consists of spring steel.

10. Roller blind system according to one of the preceding claims, **characterized in that** the guide strip (18) during winding up of the roller blind web (10) is wound onto the winding tube (12) together with said roller blind web (10).

11. Roller blind system according to one of the preceding claims, **characterized in that** the roller blind web (10) in the respective edge region is folded over parallel to the guide strip (18), and the guide strip runs within this fold (28).

12. Roller blind system according to Claim 11, **characterized in that** that edge of the roller blind web (10) which forms the fold (28) is joined to the roller blind web and thus creates a pocket.

13. Roller blind system according to Claim 11 or 12, **characterized in that** the guide strip (18) is adhesively mounted into the fold (28).

14. Roller blind system according to one of the preceding Claims 1 to 10, **characterized in that** the guide strip (18) is adhesively mounted onto the roller blind web (10).

15. Roller blind system according to one of the preceding Claims 1 to 10, **characterized in that** the guide strip (18) is extrusion-mounted onto the roller blind web (10).

16. Roller blind system according to one of the preceding Claims 1 to 10, **characterized in that** the guide strip (18) is moulded onto the roller blind web (10) by means of an injection moulding process.

17. Roller blind system according to one of the preceding Claims 1 to 10, **characterized in that** the guide strip (18) is welded onto the roller blind web (10).

18. Roller blind system according to Claim 17, **characterized in that** a film is inserted between the guide strip (18) and the roller blind web (10) as a bonding agent.

19. Roller blind system according to one of the preceding claims, **characterized in that** the guide track (20) consists of a bottom part (24) and a cover (26).

20. Roller blind system according to one of the preceding Claims 1 to 18, **characterized in that** the guide track (20) is configured as one part and has a bending line which is executed such that the guide track can be bent shut along said bending line.

21. Roller blind system according to one of the preceding claims, **characterized in that** the guide strip (18) is made of metal.

22. Roller blind system according to one of the preceding Claims 1 to 20, **characterized in that** the guide strip (18) consists of a metal strip which is overmoulded with plastic.

23. Roller blind system according to one of the preceding Claims 1 to 20, **characterized in that** the guide strip (18) is made of plastic.

24. Roller blind system according to Claim 22 or 23, **characterized in that** the plastic is reinforced with glass fibres.

25. Roller blind system according to one of the preceding claims, **characterized in that** the roller blind system further has a pulling bow (16) which is guided in a pulling bow guide, and the pulling bow guide and the guide track (20) of the guide strip are contained in a common guide rail.

26. Roller blind system according to Claim 25, **characterized in that** in a corner region of the roller blind web (10) adjacent to the pulling bow (16) and the guide strip (18), said roller blind web (10) has a reinforcement element (34).

27. Roller blind system according to Claim 26, **characterized in that** the reinforcement element (34) connects the pulling bow (16) to the guide strip (18).

28. Roller blind system according to Claim 26, **characterized in that** the reinforcement element (34) is attached to the roller blind web (10) without any connection to the pulling bow (16) and the guide strip (18).

29. Roller blind system according to one of the preceding claims, **characterized in that** the system has a drive and the guide strip (18) is connected to the drive such that the drive can wind down the roller blind web (10) via the guide strip.

30. Roller blind system according to Claim 29, **characterized in that** the guide strip (18) is guided in a manner that is rigid in compression.

31. Roller blind system according to one of the preceding Claims 1 to 28, **characterized in that** the system has a drive and a drive cable (36), and the drive cable is connected to the drive and the roller blind web (10) such that the drive can wind down the roller blind web via the drive cable.

32. Roller blind system according to Claim 31, **characterized in that** the drive cable is guided in a cable guide (38) which is contained together with the guide track (20) of the guide strip (18) in a common guide rail.

33. Roller blind system according to one of the preceding claims, **characterized in that** the roller blind web is connected to the winding tube via at least one constant-force spring which comprises a spirally wound spring element made from a flat strip (18), the one end of said flat strip (18) being connected to the winding tube.

34. Roller blind system according to one of Claims 1 to 32, **characterized in that** the at least one winding tube is formed by a constant-force spring to which the roller blind web is connected and which comprises a spirally wound spring element made from a flat strip (18), the inner end of said flat strip (18) in every operational position of the roller blind system forming at least one winding for winding up the roller blind web.

35. Roller blind system according to Claim 33 or 34, **characterized in that** a pulling bow (16) is further provided which is connected to that end of the roller blind web which is remote from the winding tube (12) and to the outer end of the constant-force spring (18).

36. Roller blind system according to one of Claims 33 to 35, **characterized in that** the roller blind system further has a drive, and the constant-force spring (18) is connected to the drive in such a manner that for the deployment of the roller blind web (10) said constant-force spring (18) can be unwound by the drive.

37. Roller blind system according to one of Claims 34 to 36, **characterized in that** the flat strip (18) forming the constant-force spring in the region of the deployed roller blind web (10) is guided in a linear guide track (20).

38. Roller blind system according to Claim 37, **characterized in that** the pulling bow (16) is guided in a pulling bow guide and the pulling bow guide and the guide track (20) of the flat strip (18) are contained in a common guide rail.

39. Roller blind system according to one of Claims 33 to 38, **characterized in that** the flat strip (18) consists of metal.

40. Roller blind system according to one of Claims 33 to 39, **characterized in that** the pulling bow (16) is connected to a brake device having a constant brake force, said brake device being configured such that it can retain the pulling bow and the roller blind web (10) in any arbitrary position.

41. Roller blind system according one of the claims referring back to Claim 1 and also to either of Claims 33 and 34, **characterized in that** the flat strip of the constant-force spring simultaneously serves as guide strip (18).

## Revendications

1. Système de store pour un véhicule, comprenant au moins une bande de store (10) et au moins un tube d'enroulement (12) pour enrouler et dérouler la bande de store, la bande de store comprenant le long des deux régions de bord latérales à chaque fois au moins une bande de guidage plane flexible (18), laquelle s'étend le long de la direction de traction du store et laquelle est guidée dans un guide (20), le guide comportant une coulisse dans laquelle la bande de guidage est guidée et laquelle coulisse comprend une fente de sortie (22) à travers laquelle la bande de store sort du guide, la bande de guidage étant guidée de telle sorte que sa surface de base (31) soit guidée essentiellement parallèlement à la région adjacente de la bande de store, et la forme et les dimensions de la fente de sortie et de la bande de guidage étant dimensionnées de telle sorte que la bande de guidage ne puisse pas sortir d'elle-même du guide, la bande de guidage (18) étant guidée dans un canal de guidage (23) à l'intérieur du guide (20), un fond (27) du canal de guidage s'étendant dans un plan parallèle à la bande de store tirée (10), **caractérisé en ce que** l'ouverture de la fente de sortie (22) est plus petite que la largeur de la surface de base (31) de la bande de guidage (18) et la section transversale de la bande de guidage s'appuie en au moins deux points (25, 23b) contre le canal de guidage (23) pour empêcher une rotation de son axe longitudinal, et la bande de store (10) est fixée dans la région du bord latéral de la bande de guidage (18).

2. Système de store selon la revendication 1, **caractérisé en ce que** la bande de guidage (18) glisse sur au moins une nervure (25) du guide (20).

3. Système de store selon l'une quelconque des revendications précédentes, **caractérisé en ce qu'**un rail de glissement (40) est installé entre le guide (20) et la bande de guidage (18), lequel rail de glissement est relié solidement au guide et est en contact glissant avec la bande de guidage.

4. Système de store selon la revendication 3, **caractérisé en ce que** le rail de glissement (40) est constitué de plastique.

5. Système de store selon la revendication 3, **caractérisé en ce que** le rail de glissement (40) est constitué de métal.

6. Système de store selon l'une quelconque des revendications précédentes, **caractérisé en ce que** le guide (20) est constitué d'aluminium.

7. Système de store selon l'une quelconque des revendications précédentes, **caractérisé en ce qu'**un élément de ressort est inséré entre la bande de guidage (18) et le guide (20).

8. Système de store selon la revendication 7, **caractérisé en ce que** l'élément de ressort est constitué d'une mousse.

9. Système de store selon la revendication 7, **caractérisé en ce que** l'élément de ressort est constitué d'acier à ressorts.

10. Système de store selon l'une quelconque des revendications précédentes, **caractérisé en ce que** la bande de guidage (18) est enroulée conjointement avec la bande de store sur le tube d'enroulement (12) lors de l'enroulement de la bande de store (10).

11. Système de store selon l'une quelconque des revendications précédentes, **caractérisé en ce que** la bande de store (10) est rabattue parallèlement à la bande de guidage (18) dans la région de bord respective, et la bande de guidage s'étend à l'intérieur de ce rabat (28).

12. Système de store selon la revendication 11, **caractérisé en ce que** le bord de la bande de store (10) formant le rabat (28) est relié à la bande de store et forme ainsi une poche.

13. Système de store selon la revendication 11 ou 12, **caractérisé en ce que** la bande de guidage (18) est collée dans le rabat (28).

14. Système de store selon l'une quelconque des revendications précédentes 1 à 10, **caractérisé en ce que** la bande de guidage (18) est collée sur la bande de store (10).

15. Système de store selon l'une quelconque des revendications précédentes 1 à 10, **caractérisé en ce que** la bande de guidage (18) est extrudée sur la bande de store (10).

16. Système de store selon l'une quelconque des revendications précédentes 1 à 10, **caractérisé en ce que** la bande de guidage (18) est moulée par injection sur la bande de store (10) au moyen d'un procédé de moulage par injection.

17. Système de store selon l'une quelconque des revendications précédentes 1 à 10, **caractérisé en ce que** la bande de guidage (18) est soudée sur la bande de store (10).

18. Système de store selon la revendication 7, **caractérisé en ce qu'**un film faisant office de promoteur d'adhérence est inséré entre la bande de guidage (18) et la bande de store (10).

19. Système de store selon l'une quelconque des revendications précédentes, **caractérisé en ce que** le guide (20) est constitué d'une partie inférieure (24) et d'un recouvrement (26).

20. Système de store selon l'une quelconque des revendications précédentes 1 à 18, **caractérisé en ce que** le guide (20) est réalisé d'un seul tenant et comprend une ligne de pliage qui est réalisée de telle sorte que le guide puisse être plié le long de cette ligne de pliage.

21. Système de store selon l'une quelconque des revendications précédentes, **caractérisé en ce que** la bande de guidage (18) est fabriquée en métal.

22. Système de store selon l'une quelconque des revendications précédentes 1 à 20, **caractérisé en ce que** la bande de guidage (18) est constituée d'une bande de métal qui est surmoulée avec du plastique.

23. Système de store selon l'une quelconque des revendications précédentes 1 à 20, **caractérisé en ce que** la bande de guidage (18) est fabriquée en plastique.

24. Système de store selon la revendication 22 ou 23, **caractérisé en ce que** le plastique est renforcé par des fibres de verre.

25. Système de store selon l'une quelconque des revendications précédentes, **caractérisé en ce que** le système de store comprend en outre une baleine de traction (16) qui est guidée dans un guide de baleine de traction, et le guide de baleine de traction et le guide (20) de la bande de guidage sont contenus dans un rail de guidage commun.

26. Système de store selon la revendication 25, **caractérisé en ce que**, dans une région de coin de la bande de store (10) adjacente à la baleine de traction (16) et à la bande de guidage (18), cette bande de store comprend un élément de renforcement (34).

27. Système de store selon la revendication 26, **caractérisé en ce que** l'élément de renforcement (34) relie la baleine de traction (16) à la bande de guidage (18).

28. Système de store selon la revendication 26, **caractérisé en ce que** l'élément de renforcement (34) est installé sur la bande de store (10) sans liaison avec la baleine de traction (16) et la bande de guidage (18).

29. Système de store selon l'une quelconque des revendications précédentes, **caractérisé en ce que** le système comprend un entraînement et la bande de guidage (18) est en liaison avec l'entraînement de telle sorte que l'entraînement puisse dérouler la bande de store (10) par le biais de la bande de guidage.

30. Système de store selon la revendication 29, **caractérisé en ce que** la bande de guidage (18) est guidée de manière rigide en compression.

31. Système de store selon l'une quelconque des revendications précédentes 1 à 28, **caractérisé en ce que** le système comprend un entraînement ainsi qu'un câble d'entraînement (36), et le câble d'entraînement est en liaison avec l'entraînement et la bande de store (10) de telle sorte que l'entraînement puisse dérouler la bande de store par le biais du câble d'entraînement.

32. Système de store selon la revendication 31, **caractérisé en ce que** le câble d'entraînement est guidé dans un guide de câble (38) qui est contenu, conjointement avec le guide (20) de la bande de guidage (18), dans un rail de guidage commun.

33. Système de store selon l'une quelconque des revendications précédentes, **caractérisé en ce que** la bande de store est en liaison avec le tube d'enroulement par le biais d'au moins un ressort à force constante, lequel comporte un élément de ressort enroulé en forme de spirale et constitué d'une bande plate (18) dont l'une des extrémités est reliée au tube d'enroulement.

34. Système de store selon l'une quelconque des revendications 1 à 32, **caractérisé en ce que** l'au moins un tube d'enroulement est formé par un ressort à force constante avec lequel la bande de store est en liaison et qui comporte un élément de ressort enroulé en forme de spirale et constitué d'une bande plate (18) dont l'extrémité intérieure forme, dans chaque position de fonctionnement du système de store, au moins une bobine pour l'enroulement de la bande de store.

35. Système de store selon la revendication 33 ou 34, **caractérisé en ce qu'**il est en outre prévu une baleine de traction (16) qui est reliée à l'extrémité de la bande de store opposée au tube d'enroulement (12) ainsi qu'à l'extrémité extérieure du ressort à force constante (18).

36. Système de store selon l'une quelconque des revendications 33 à 35, **caractérisé en ce que** le système de store comprend en outre un entraînement et le ressort à force constante (18) est en liaison avec l'entraînement de telle sorte qu'il puisse être déroulé par l'entraînement pour faire sortir la bande de store (10).

37. Système de store selon l'une quelconque des revendications 34 à 36, **caractérisé en ce que** la bande plate (18) formant le ressort à force constante est guidée dans un guide linéaire (20) dans la région de la bande de store tirée (10).

38. Système de store selon la revendication 37, **caractérisé en ce que** la baleine de traction (16) est guidée dans un guide de baleine de traction, et le guide de baleine de traction et le guide (20) de la bande plate (18) sont contenus dans un rail de guidage commun.

39. Système de store selon l'une quelconque des revendications 33 à 38, **caractérisé en ce que** la bande plate (18) est constituée de métal.

40. Système de store selon l'une quelconque des revendications 33 à 39, **caractérisé en ce que** la baleine de traction (16) est en liaison avec un dispositif de freinage de force de freinage constante qui est réalisé de telle sorte qu'il puisse fixer la baleine de traction et la bande de store (10) dans n'importe quelle position.

41. Système de store selon l'une quelconque des revendications se rapportant non seulement à la revendication 1 mais encore à l'une quelconque des revendications 33 et 34, **caractérisé en ce que** la bande plate du ressort à force constante sert en même temps de bande de guidage (18).
